# EUROPEAN PATENT SPECIFICATION

(11) **EP 4 291 426 B1**
(45) Date of publication and mention of the grant of the patent: **19.03.2025**
(21) Application number: 22714724.6
(22) Date of filing: 17.03.2022
(51) Int. Cl.: B60J 5/10

(54) **LIFTGATE REINFORCEMENT MECHANICAL ATTACHMENT ARRANGEMENT**
MECHANISCHE BEFESTIGUNGSANORDNUNG FÜR HECKKLAPPENVERSTÄRKUNG
AGENCEMENT DE FIXATION MÉCANIQUE DE RENFORT DE HAYON

(30) Priority: 17.03.2021 US 202163162370 P
(43) Date of publication of application: 20.12.2023
(73) Proprietor: Magna Exteriors Inc., Aurora, ON L4G 7K1 (CA)
(72) Inventor: CHAAYA, Riad, Clarkston, MI 48348 (US); TICHY, Stanislav, Troy, MI 48085 (US); KUNTZE, Christopher J., Goodrich, MI 48438 (US)
(74) Representative: Witte, Weller und Partner Patentanwälte mbB Stuttgart
(86) International application number: PCT/US2022/020692
(87) International publication number: WO 2022/197888

(56) References cited:
- CN-A- 106 218 370
- US-A1- 2020 164 929
- US-B1- 8 899 658
- US-B1- 9 205 728
- US-B2- 10 384 520
- US-B2- 10 899 202

## Description

### FIELD OF THE INVENTION

The present invention relates to a reinforcement attachment arrangement for a thermoplastic liftgate.

### BACKGROUND OF THE INVENTION

Many vehicles, in particular SUV's have what is commonly referred to as a rear liftgate, which is essentially a door that seals the back or rear portion of the vehicle passenger compartment. Production of these liftgates can be expensive and time consuming because there are many components that need to be assembled together.

Recently the automotive field has migrated toward producing the rear liftgate from thermoplastic materials. Typically, this involves producing an inner panel made of thermoplastic, attaching several reinforcement pieces at strategic locations on the inner panel, and then attaching an exterior panel or panels, which form the outside surface of the liftgate panel and vehicle.

Connection of the reinforcement panels to the inner panel during assembly has traditionally been done using several fasteners. The process involves straight loading the reinforcement and holding it with multiple fasteners, which increases production cost and production time. It is desirable to reduce the number of fasteners required for connecting a reinforcement to the inner panel, which will save production time as well as costs. Attempts to eliminate the fasteners have been made, which include overmolding the reinforcement to the liftgate inner panel or using adhesives or welding to connect the reinforcement panel to the liftgate inner panel. These approaches increase the production time and also require additional equipment, thereby increasing manufacturing costs in the short term. It is therefore desirable to develop methods that will reduce production time, while also keeping costs in control. It is also an object of the present invention to develop an assembly arrangement that will reduce the number of fasteners.

US 2020/0164929 A1 discloses a liftgate arrangement including a thermoplastic inner panel with an outer surface and an inner surface. The liftgate arrangement further includes one or more carbon fiber sheet mold compound reinforcements connected to and extending across a portion of the outer surface of the inner panel. The one or more carbon fiber sheet mold compound reinforcements also includes a channel extending between two openings on the one or more carbon fiber sheet mold compound reinforcements. The one or more carbon fiber sheet mold compound reinforcements are used to strengthen the inner panel at desired locations.

US 10, 899,202 B2 discloses a composite liftgate including an inner panel construction having strengthening channel structure in combination with a ribbing. Structural steel reinforcements are bonded to the inner panel where additional strength is needed. Where the extra structure is needed, a minimum amount of steel is used and the structural reinforcement is bonded in place using adhesive.

US 10,384,520 B2 discloses a composite liftgate system with an inner panel construction having a strengthening channel structure. Structural composite reinforcements are bonded to the inner panel where additional strength is needed to meet predetermined performance requirements. Where the extra structure is needed, no steel or a minimum amounts of steel is used and the structural reinforcements are bonded in place using adhesive prior to application of additional fasteners.

### SUMMARY OF THE INVENTION

A reinforcement attachment arrangement for a thermoplastic liftgate comprising the features of claims 1 and 15, respectively, is provided according to the invention.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
Fig. 1A is a rear perspective view of a thermoplastic liftgate.
Fig. 1B is a rear perspective view of a liftgate inner panel with the reinforcements attached.
Fig. 2 is a side cross-sectional elevational view of a portion of a thermoplastic liftgate.
Fig. 3 is a side cross-sectional elevational view of a portion of the thermoplastic liftgate.
Fig. 4 is a side cross-sectional elevational view of a portion of the thermoplastic liftgate.
Fig. 5 is a side cross-sectional elevational view of a portion of the thermoplastic liftgate.
Fig. 6 is a side cross-sectional elevational view of a portion of the thermoplastic liftgate.
Fig. 7 is a side cross-sectional elevational view of an alternate reinforcement arrangement of the thermoplastic liftgate.
Fig. 8A is an enlarged top perspective view of a connection member in a first position.
Fig. 8B is an enlarged top perspective view of the connection member of Fig. 8A in a second position.
Fig. 9 is a side cross-sectional plan view of a second alternate connection member of the thermoplastic liftgate.
Fig. 10A is a side cross-sectional elevational view of an alternate reinforcement arrangement.
Fig. 10B is an enlarged cross-sectional elevational view of the reinforcement arrangement of Fig. 10A.
Fig. 11A is a side cross-sectional elevational view of an alternate reinforcement arrangement.
Fig. 11B is an enlarged cross-sectional elevational view of the reinforcement arrangement of Fig. 11A.
Fig. 12A is a side cross-sectional elevational view of an alternate reinforcement arrangement.
Fig. 12B is an enlarged cross-sectional elevational view of the reinforcement arrangement of Fig. 12A.
Fig. 13A is a side cross-sectional elevational view of an alternate reinforcement arrangement.
Fig. 13B is an enlarged cross-sectional elevational view of the reinforcement arrangement of Fig. 13A.
Fig. 14 is an enlarged cross-sectional top view of an alternate fixing proposal for a reinforcement arrangement.
Fig. 15A is a side cross-sectional elevational view of an alternate reinforcement arrangement.
Fig. 15B is an enlarged cross-sectional elevational view of the reinforcement arrangement of Fig. 15A.

### DETAILED DESCRIPTION OF THE PREFERRED EMBODIMENTS

The following description of the preferred embodiment(s) is merely exemplary in nature and is in no way intended to limit the invention, its application, or uses.

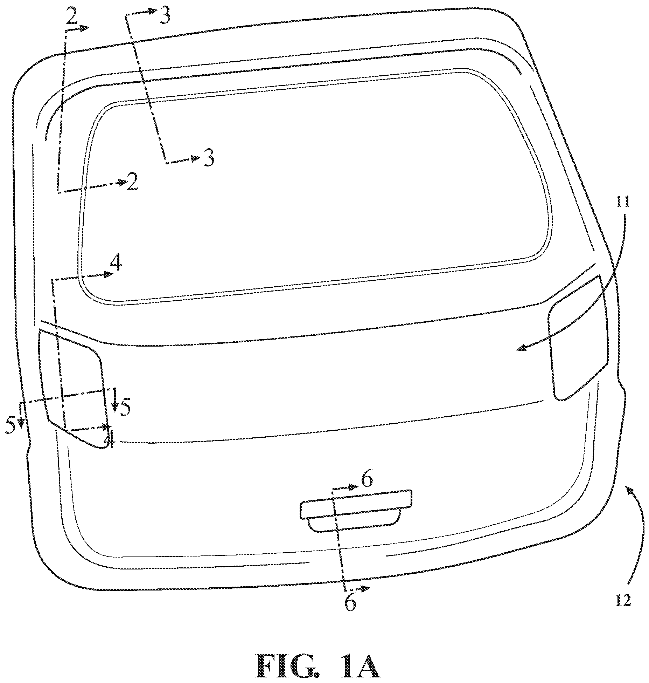

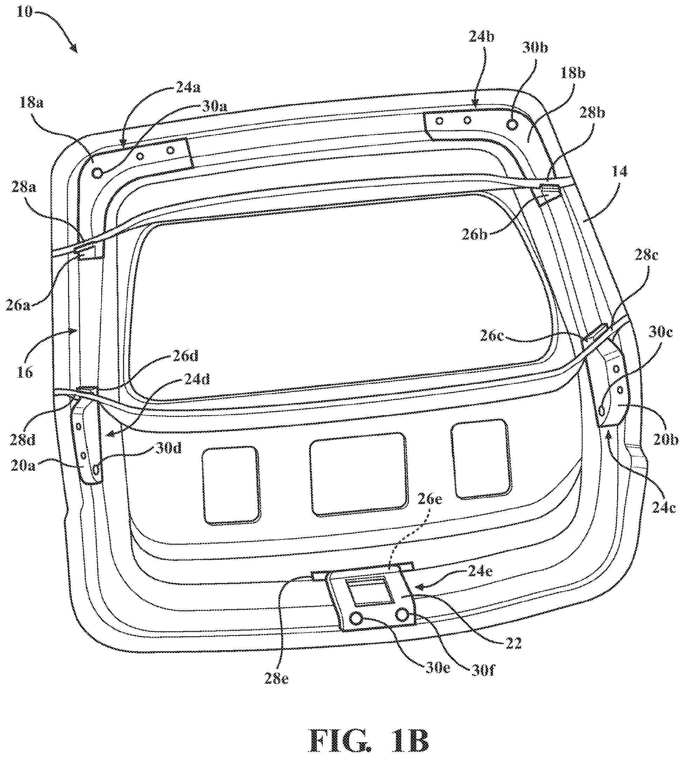

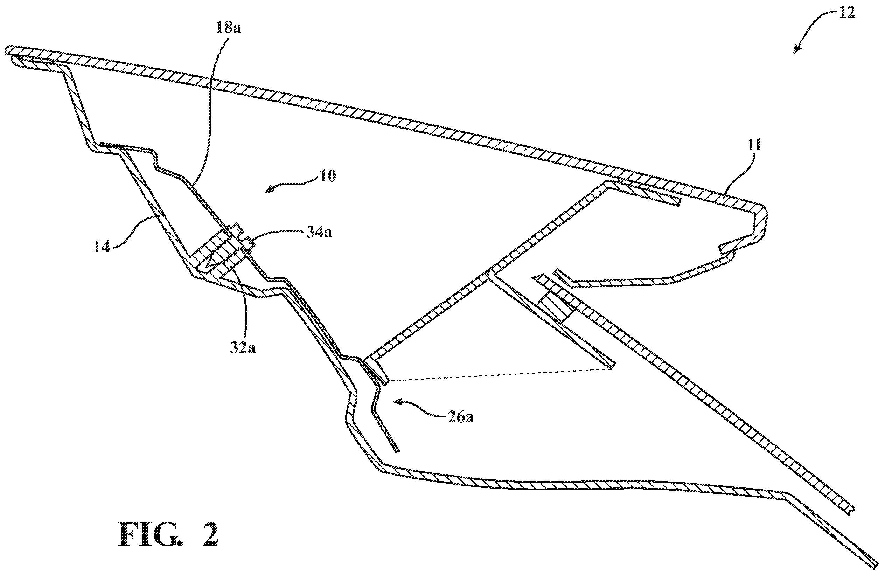

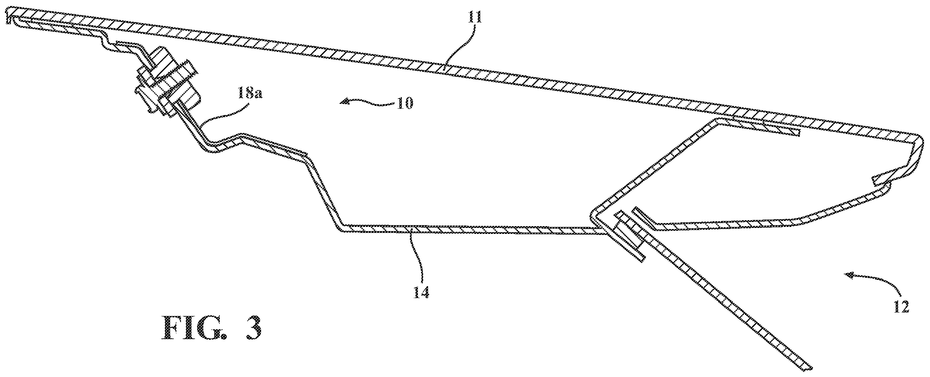

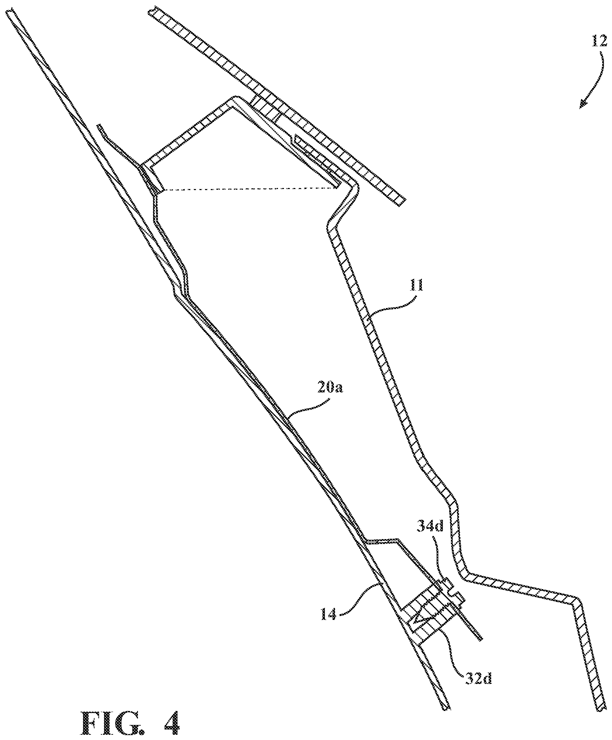

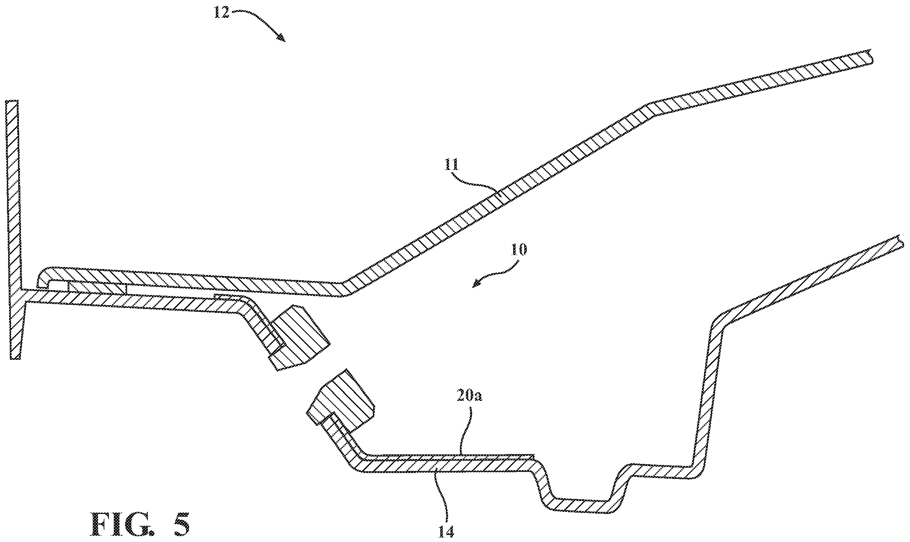

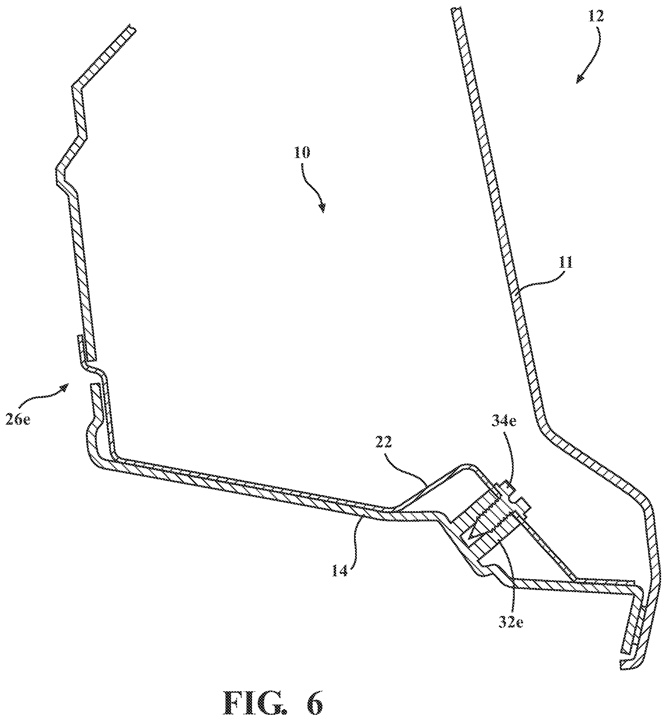

Referring now to Figs. 1A, 1B to 6 a reinforcement attachment arrangement 10 for a thermoplastic lift gate 12 for connection to a vehicle is shown. The thermoplastic liftgate 12 includes a liftgate inner panel 14 having an outer surface area 16. Fig. 1A shows a thermoplastic liftgate 12 having an outer panel 11 connected to and covering the inner panel 14 shown in Fig. 1A. The thermoplastic liftgate 12 has several components attached, including hinges and actuators with ball stud attachments that connect the thermoplastic liftgate 12 to the vehicle, as well as latch and accessory reinforcements. In the present embodiment of the invention, many of these components are attached at a location where a reinforcement 18a, 18b, 20a, 20b, 22 has been connected to the liftgate inner panel 14. Each reinforcement 18a, 18b, 20a, 20b, 22 is connected to a reinforcement area 24a, 24b, 24c, 24d, 24e formed on the outer surface of the liftgate inner panel 14. As shown in Fig. 1B reinforcement area 24a is a left side hinge reinforcement area and reinforcement area 24b is a right side hinge reinforcement area. While two reinforcement areas for hinges are shown it is within the scope of this invention for there to be more than two or just a single hinge reinforcement area.

Fig. 1A also shows reinforcement area 24d which is a left side ball stud reinforcement area and reinforcement area 24c which is a right side ball stud reinforcement area. The ball stud reinforcement area is where one end of a pneumatic shock or other devices, such as an actuator, is attached to a ball stud for assisting in the opening and closing of the lift gate when attached to the vehicle. While two ball stud reinforcement areas are shown it is within the scope of this invention for there to just be a single ball stud reinforcement area, or for there to be more than two balls that reinforcement areas formed on the outer surface of the liftgate inner panel 14.

In Fig. 1A reinforcement area 24e is a latch reinforcement area located in the vicinity of the liftgate inner panel 14. While two latch reinforced areas are shown, it is within the scope of this invention for there to be a greater or lesser number of latch reinforcement areas, depending upon the needs of a particular application.

Each reinforcement area 24a, 24b, 24c, 24d, 24e has a respective reinforcement 18a, 18b, 20a, 20b, 22 connected. The reinforcement 18a, 18b, 20a, 20b, 22 can be a piece of metal, or stiff polymer that is connected to the liftgate inner panel 14 and will provide additional rigidity in support for connecting the other structures mentioned above. The connection between each reinforcement 18a, 18b, 20a, 20b, 22 and its respective reinforcement area 24a, 24b, 24c, 24d, 24e is provided by features located on both the reinforcement area 24a, 24b, 24c, 24d, 24e and the reinforcement 18a, 18b, 20a, 20b, 22. Generally each reinforcement 18a, 18b, 20a, 20b, 22 has an engagement tab 26a, 26b, 26c, 26d, 26e that slides or pivots beneath a receiving portion 28a, 28b, 28c, 28d, 28e formed in the reinforcement area 24a, 24b, 24c, 24d, 24e.

The receiving portion 28a, 28b, 28c, 28d, 28e can take several forms and can be a bridge in the liftgate inner panel 14 formed between two surfaces, a flange or undercut formed on the surface of the liftgate inner panel 14 or an aperture formed in the liftgate inner panel 14. While five receiving portions 28a, 28b, 28c, 28d, 28e are depicted, it is within the scope of this invention for the respective reinforcement to have multiple engagement tabs that engage a respective receiving portion. Depending on the size of the reinforcement, it is within the scope of this invention for there to be multiple receiving portions on a single reinforcement, each configured to connect to one of multiple receiving portions on the liftgate inner panel.

When the reinforcement 18a, 18b, 20a, 20b, 22 slides into position, there is one or more apertures 30a, 30b, 30c, 30d, 30e, 30f formed on the reinforcement 18a, 18b, 20a, 20b, 22 that aligns with a connection member 32a, 32d, 32e formed on the outside surface of the liftgate inner panel 14 in the region of the reinforcement area 24a, 24b, 24c, 24d, 24e. In the present embodiment of the invention shown in the figures the connection member is a fastener boss that is configured to threadably receive a fastener 34a, 34d, 34e that is positioned through the aperture of the reinforcement member, thereby holding the reinforcement member against the fastener boss to lock the reinforcement into place at the reinforcement area. Depending on the size of the reinforcement, it is within the scope of this invention for a given for there to be multiple apertures that allow for connection of the reinforcement to one of multiple connection members on the liftgate inner panel.

The present embodiment of the invention reduces the number of fasteners needed for connecting the reinforcement since the use of the engagement tab 26a, 26b, 26c, 26d, 26e sliding into contact with the respective receiving portion 28a, 28b, 28c, 28d, 28e eliminates several fasteners that would normally be used to secure the reinforcement in the area of the receiving portion 28a, 28b, 28c, 28d, 28e.

Once all of the reinforcements have been connected to the liftgate inner panel 14, the thermoplastic liftgate further includes attaching a liftgate exterior panel that covers the liftgate inner panel 14 and reinforcements. The liftgate exterior panel 11 is attached and becomes a portion of the exterior surface of the vehicle.

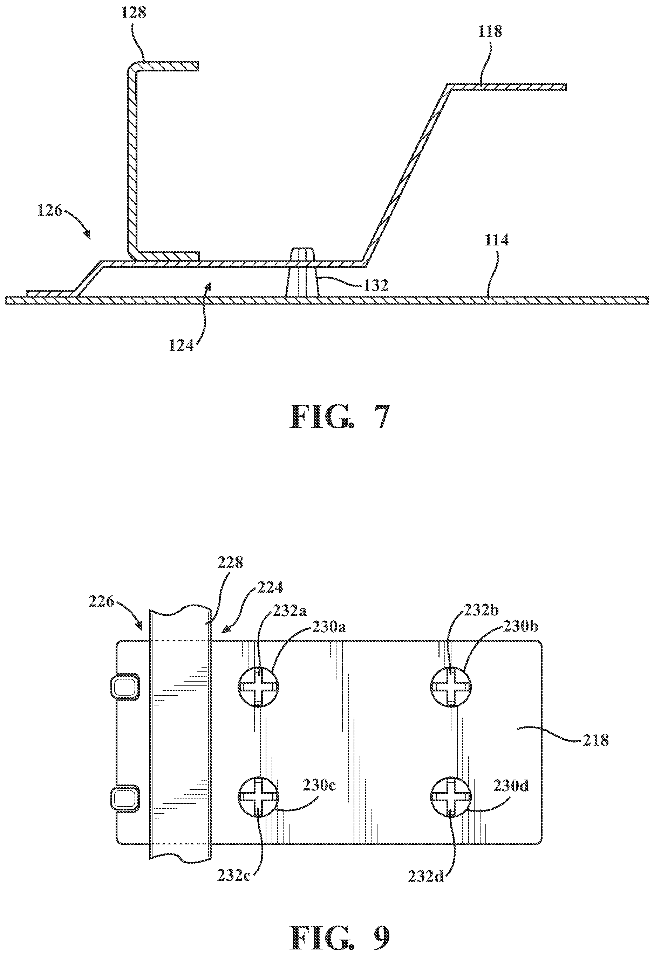

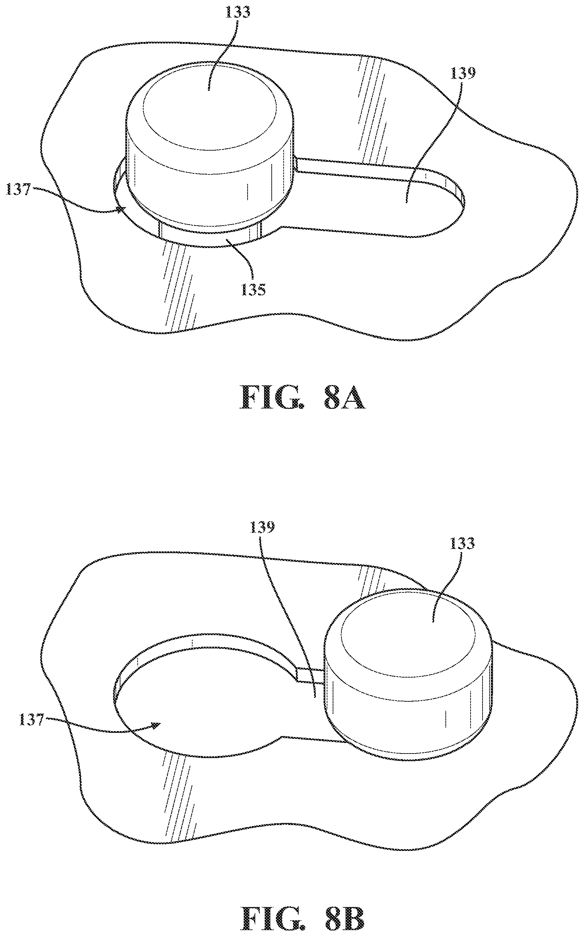

Figs. 7-9 depict alternate embodiments of the invention which eliminate the use of fasteners altogether. In Figs. 7, 8A, 8B there is shown a reinforcement member 118 and liftgate inner panel 114 that could be used in place of the liftgate inner panel 14 and reinforcement 18a, 18b, 20a, 20b, 22 shown in Figs. 1-6. The liftgate inner panel 114 has connection member that is a key post 132 with a round head 133 and stem 135 that aligns with a keyhole 137 on the reinforcement 118 so that when an engagement tab 126 of the reinforcement 118 slides under a receiving portion 128 of a reinforcement area 124, the key post 132 extends through a wider portion of the keyhole 137 and then slides to a narrow portion 139, thereby locking the reinforcement 118 in place against the lift gate inner panel 114.

Fig. 9 depicts another alternate embodiment where the connection member is several push posts 232a, 232b, 232c, 232d that are configured to align with and pass through several apertures 230a, 230b, 230c, 230d formed on a reinforcement 218 once an engagement tab 226 has been slid under a receiving portion 228 of a reinforcement area 224. In both alternate embodiments of the invention, it is within the scope of the invention to use a greater or lesser number of connection members depending on the needs of a particular application.

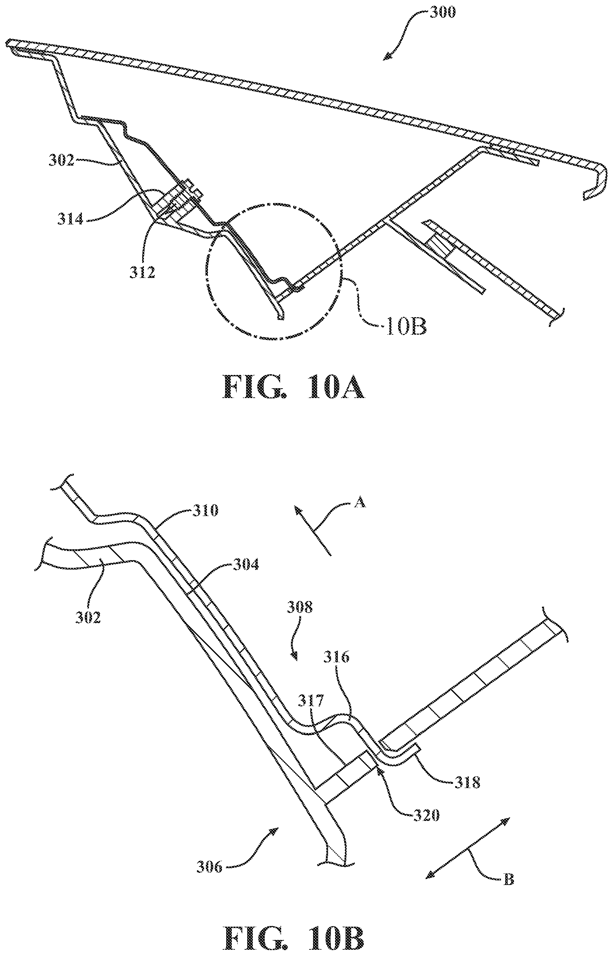

Figs. 10A and 10B show a reinforcement arrangement 300 according to an alternate embodiment of the invention. The reinforcement arrangement 300 includes a liftgate inner panel 302 having an outer surface 304. Formed on the outer surface 304 is a receiving portion 306 to which an engaging tab 308 of a reinforcement 310 engages. The reinforcement 310 is connected to the liftgate inner panel 302 using a fastener 312 connected to a boss 314 formed on the liftgate inner panel 302. While a fastener 312 is used it is within the scope of this invention for a different type of connection to be used, such as adhesives, welds and mechanical push connections. The reinforcement 310 has an engagement tab 308 of the reinforcement 310 has a neck 316 that forms a bend in the reinforcement 310 that terminates at an engagement end 318 that bends generally perpendicular to the surface of the neck 316. The neck 316 bends in a manner that creates a space between the neck 316 and an aperture wall 317 of the liftgate inner panel 302. The receiving portion 306 of the liftgate inner panel 302 has an aperture 320 that the engagement end 318 slides into to connect the reinforcement 310 to the liftgate inner panel 302. This arrangement prevents the reinforcement 310 from pulling out of the aperture 320 along arrow A and prevents up and down movement along arrow B. The reinforcement arrangement 300 shown in Figs. 10A and 10B can be used in place or in combination with any reinforcement area 24a-e and inner panel 14 shown in the earlier figures.

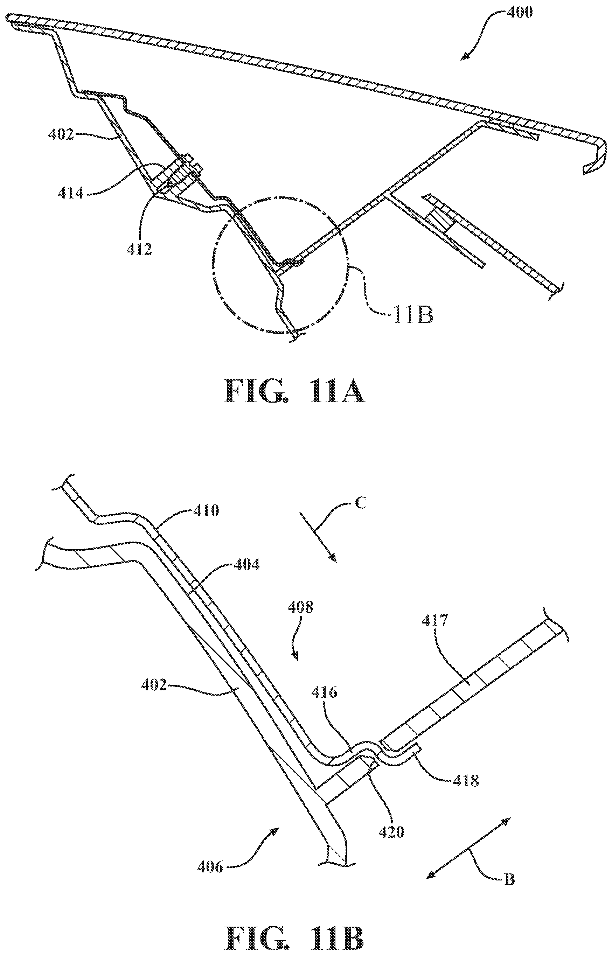

Figs. 11A and 11B show a reinforcement arrangement 400 according to an alternate embodiment of the invention. The reinforcement arrangement 400 includes a liftgate inner panel 402 having an outer surface 404. Formed on the outer surface 404 is a receiving portion 406 to which an engaging tab 408 of a reinforcement 410 engages. The reinforcement 410 is connected to the liftgate inner panel 402 using a fastener 412 connected to a boss 414 formed on the liftgate inner panel 402. While a fastener 412 is used it is within the scope of this invention for a different type of connection to be used, such as adhesives, welds and mechanical push connections. The reinforcement 410 has an engagement tab 408 of the reinforcement 410 has a neck 416 that forms a bend in the reinforcement 410 that terminates at an engagement end 418 that bends generally perpendicular to the surface of the neck 416. The receiving portion 406 of the liftgate inner panel 402 has an aperture 420 that the engagement end 418 slides into to connect the reinforcement 410 to the liftgate inner panel 402. The neck 416 in this embodiment has bends to rest against an aperture wall 417 when the engagement end 418 is positioned in the aperture 420. This prevents the reinforcement 410 from pulling out of the aperture 420 but prevents the reinforcement 410 from being further pushed into the aperture 420 along arrow C. Additionally, this arrangement prevents movement along arrow B'. The reinforcement arrangement 400 shown in Figs. 10A and 10B can be used in place or in combination with any reinforcement area 24a-e and inner panel 14 shown in the earlier figures.

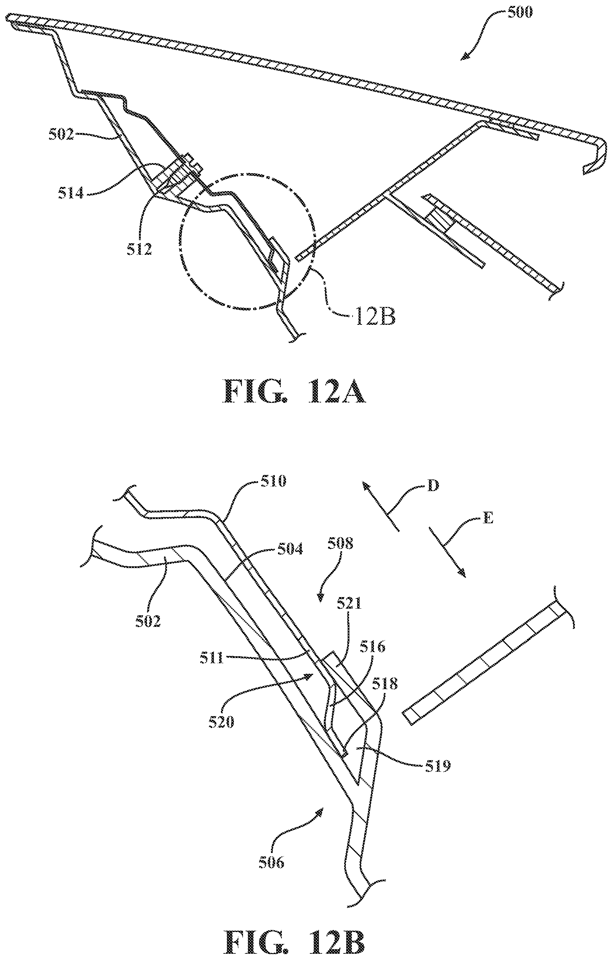

Figs. 12A and 12B show a reinforcement arrangement 500 according to an alternate embodiment of the invention. The reinforcement arrangement 500 includes a liftgate inner panel 502 having an outer surface 504. Formed on the outer surface 504 is a receiving portion 506 to which an engaging tab 508 of a reinforcement 510 engages. The reinforcement 510 is connected to the liftgate inner panel 502 using a fastener 512 connected to a boss 514 formed on the liftgate inner panel 502. While a fastener 512 is used it is within the scope of this invention for a different type of connection to be used, such as adhesives, welds and mechanical push connections. The reinforcement 510 has an engagement tab 508 of the reinforcement 510 has a neck 516 that forms a bend in the reinforcement 510 away from a main surface 511 of the reinforcement 510 that terminates at an engagement end 518. The receiving portion 506 of the liftgate inner panel 502 has an aperture 520 that forms an opening or entrance to a blind hole 519 with a flexible tab 521. A portion of the main surface 511, neck 516 and engagement end 518 slide through the aperture 520 into the blind hole 519 and frictionally engages the flexible tab 512 that holds the reinforcement 510 in place on the liftgate inner panel 502. In this embodiment the neck 516 has a bend that provides some flexibility to the engagement tab 508, which helps to facilitate the frictional engagement of the engagement tab 508 with the flexible tab 521 when the engagement tab 508 is inserted into the blind hole 519. This prevents the reinforcement 510 from pulling out of the aperture 520 but prevents the reinforcement 510 from being pulled out of the aperture 520 along arrow D, while the blind hold 519 prevents the reinforcement 510 from being pushed into the aperture 520 along arrow E. The reinforcement arrangement 500 shown in can be used in place or in combination with any reinforcement area 24a-e and inner panel 14 shown in the earlier figures.

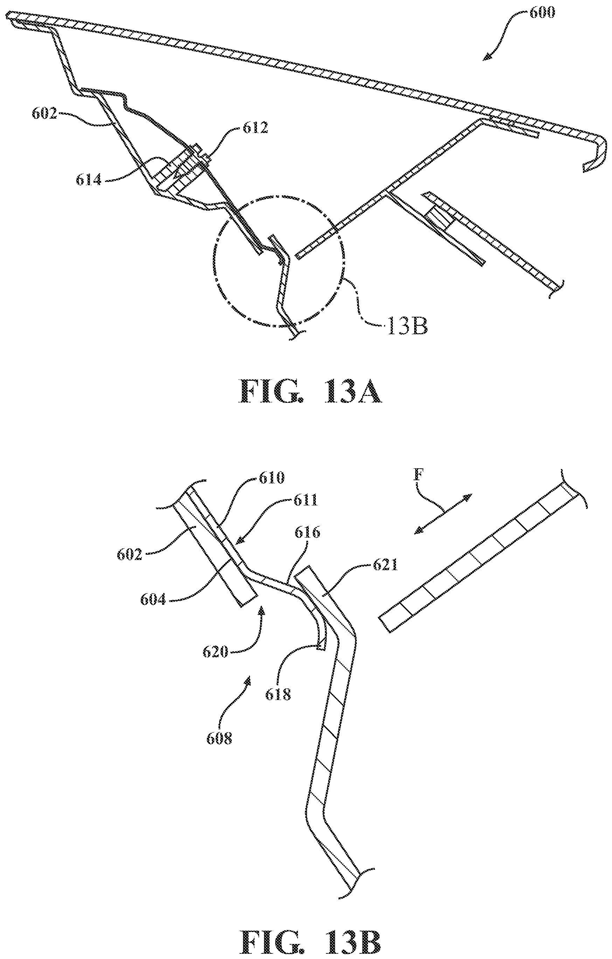

Figs. 13A and 13B show a reinforcement arrangement 600 according to an alternate embodiment of the invention. The reinforcement arrangement 600 includes a liftgate inner panel 602 having an outer surface 604. Formed on the outer surface 604 is a receiving portion 606 to which an engaging tab 608 of a reinforcement 610 engages. The reinforcement 610 is connected to the liftgate inner panel 602 using a fastener 612 connected to a boss 614 formed on the liftgate inner panel 602. While a fastener 612 is used it is within the scope of this invention for a different type of connection to be used, such as adhesives, welds and mechanical push connections. The reinforcement 610 has an engagement tab 608 of the reinforcement 610 has a neck 616 that forms a bend in the reinforcement 610 away from a main surface 611 of the reinforcement 610 that terminates at an end 618. The receiving portion 606 of the liftgate inner panel 602 has an aperture 620 formed in the liftgate inner panel 602 that includes a tab 621. A portion of the main surface 611, neck 616 and end 618 slide through the aperture 610 and frictionally engage the tab 621 that holds the reinforcement 610 in place. In this embodiment the neck 616 has a bend that provides some flexibility to the engagement tab 608, which helps to facilitate the frictional engagement of the engagement tab 608 with the tab 621 when the engagement tab 608 is inserted into the aperture 620. This prevents the reinforcement 510 from pulling out of the aperture 620 and prevents the reinforcement from moving away from the liftgate inner panel 602 along arrow F. The reinforcement arrangement 600 can be used in place or in combination with any reinforcement area 24a-e and inner panel 14 shown in the earlier figures.

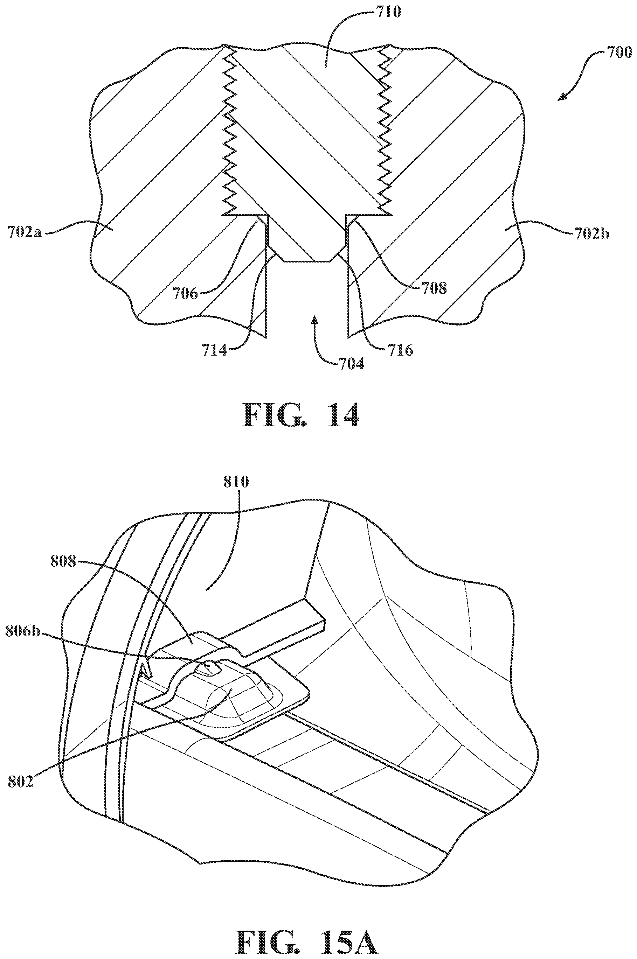

Fig. 14 is another embodiment of the invention that provides an alternate fixing proposal for a reinforcement arrangement 700 that can be used in place or in combination with any reinforcement area and inner panels shown in the earlier figures. In this embodiment of the invention the liftgate inner panel 702a, 702b has an aperture 704 formed therein that has slanted edges 706, 708. A reinforcement 710 has a tab 712 formed as part of an engagement tab that frictionally fits into the aperture 704 against the slanted edges 706, 708. The tab 712 has slanted edges 714, 716 that together with the slanted edges 706, 708 facilitate alignment of the tab 712 into the aperture 704.

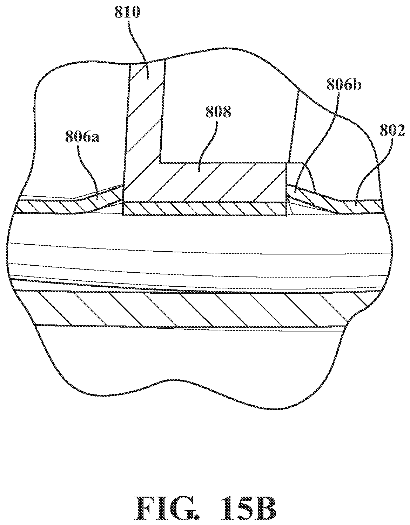

Figs. 15a and 15b depict another embodiment of the invention that provides an alternate fixing proposal for a reinforcement arrangement 800 that can be used in place or in combination with any reinforcement area and inner panels shown in the earlier figures. In this embodiment of the invention a reinforcement 802 has an engagement tab formed thereon that has a pair of opposing tabs 806a, 806b that slide into engagement with a flange 808 formed on a liftgate inner panel 810. These opposing tabs 806a, 806b lock the reinforcement 802 in place against the liftgate inner panel 810 by positioning the tabs 806a, 806b between the flange, which prevents the reinforcement 802 from sliding past the flange 808.

The description of the invention is merely exemplary in nature and, thus, variations that do not depart from the gist of the invention are intended to be within the scope of the invention. Such variations are not to be regarded as a departure from the scope of the invention as defined by the claims.

## Claims

1. A reinforcement attachment arrangement (10; 300; 400; 500; 600, 800) for a thermoplastic liftgate (12) comprising:
a liftgate inner panel (14; 114; 302; 402; 502; 602; 702; 810) having an outer surface area (16; 304; 404; 504; 604) with a plurality of reinforcement areas (24a, 24b, 24c, 24d, 24e) each having at least one receiving portion (28a, 28b, 28c, 28d, 28e; 128; 228; 306; 406; 506; 606) on the outer surface area (16; 304; 404; 504; 604) of the liftgate inner panel (14; 114; 302; 402; 502; 602; 702; 810);
a reinforcement (18a, 18b, 20a, 20b, 22; 118; 218; 310; 410; 510; 610; 710; 802) connected to each respective one of the plurality of reinforcement areas (24a, 24b, 24c, 24d, 24e) of the inner panel (14; 114; 302; 402; 502; 602; 702; 810), wherein each reinforcement (18a, 18b, 20a, 20b, 22; 118; 218; 310; 410; 510; 610; 710; 802) includes at least one engagement tab (26a, 26b, 26c, 26d, 26e; 126; 226; 308; 408; 508; 608) for engaging the at least one receiving portion (28a, 28b, 28c, 28d, 28e; 128; 228; 306; 406; 506; 606) of the respective one of the plurality of reinforcement areas (24a, 24b, 24c, 24d, 24e) to hold the reinforcement (18a, 18b, 20a, 20b, 22; 118; 218; 310; 410; 510; 610; 710; 802) onto the outer surface (16; 304; 404; 504; 604) of the liftgate inner panel (14; 114; 302; 402; 502; 602; 702; 810) when the at least one engagement tab (26a, 26b, 26c, 26d, 26e; 126; 226; 308; 408; 508; 608) is positioned in engagement with the at least one receiving portion (28a, 28b, 28c, 28d, 28e; 128; 228; 306; 406; 506; 606),
**characterised in that** the engagement tab (26a, 26b, 26c, 26d, 26e; 126; 226; 308; 408; 508; 608) of the reinforcement (18a, 18b, 20a, 20b, 22; 118; 218; 310; 410; 510; 610; 710; 802) has a neck (316; 416; 516; 616) that terminates at an engagement end (318; 418; 518; 618) and the at least one receiving portion (28a, 28b, 28c, 28d, 28e; 128; 228; 306; 406; 506; 606) is an aperture (320; 420; 520; 620; 704) formed in the liftgate inner panel (14; 114; 302; 402; 502; 602; 702; 810), wherein the engagement end (318; 418; 518; 618) slides into the aperture (320; 420; 520; 620; 704) to connect the reinforcement (18a, 18b, 20a, 20b, 22; 118; 218; 310; 410; 510; 610; 710; 802) to the liftgate inner panel (14; 114; 302; 402; 502; 602; 702; 810).

2. The reinforcement attachment arrangement (10; 300; 400; 500; 600, 800) of claim 1,
wherein the plurality of reinforcement areas (24a, 24b, 24c, 24d, 24e) further each having at least one connection member (32a, 32d, 32e; 132; 232a-232d) extending from the outer surface area (16; 304; 404; 504; 604) of the liftgate inner panel (14; 114; 302; 402; 502; 602; 702; 810);
and each reinforcement (18a, 18b, 20a, 20b, 22; 118; 218; 310; 410; 510; 610; 710; 802) further including at least one aperture (30a, 30b, 30c, 30d, 30e, 30f; 230a-230d) that aligns with at least one connection member (32a, 32d, 32e; 132; 232a-232d) formed on the outside surface of the liftgate inner panel (14; 114; 302; 402; 502; 602; 702; 810) to hold the reinforcement (18a, 18b, 20a, 20b, 22; 118; 218; 310; 410; 510; 610; 710; 802) onto the outer surface (16; 304; 404; 504; 604) of the liftgate inner panel (14; 114; 302; 402; 502; 602; 702; 810) when the at least one engagement tab (26a, 26b, 26c, 26d, 26e; 126; 226; 308; 408; 508; 608) is positioned in engagement with the at least one receiving portion (28a, 28b, 28c, 28d, 28e; 128; 228; 306; 406; 506; 606), and further comprising
a liftgate exterior panel (11) connected to the liftgate inner panel (14; 114; 302; 402; 502; 602; 702; 810) and covering the reinforcement areas (24a, 24b, 24c, 24d, 24e) and each reinforcement (18a, 18b, 20a, 20b, 22; 118; 218; 310; 410; 510; 610; 710; 802).

3. The reinforcement attachment arrangement (10; 300; 400; 500; 600, 800) of claim 2, further comprising:
wherein the at least one connection member (32a, 32d, 32e; 132; 232a-232d) is at least one fastener boss formed on the outer surface (16; 304; 404; 504; 604);
a fastener extending through the at least one aperture (30a, 30b, 30c, 30d, 30e, 30f; 230a-230d) of the reinforcement (18a, 18b, 20a, 20b, 22; 118; 218; 310; 410; 510; 610; 710; 802) and connecting to the at least one fastener boss.

4. The reinforcement attachment arrangement (10; 300; 400; 500; 600, 800) of claim 1 or 2, wherein the plurality of reinforcement areas (24a, 24b, 24c, 24d, 24e) include at least one hinge reinforcement area (24a, 24b).

5. The reinforcement attachment arrangement (10; 300; 400; 500; 600, 800) of claim 1 or 2, wherein the plurality of reinforcement areas (24a, 24b, 24c, 24d, 24e) include at least one ball stud reinforcement area (24c, 24d).

6. The reinforcement attachment arrangement (10; 300; 400; 500; 600, 800) of claim 1 or 2, wherein the plurality of reinforcement areas (24a, 24b, 24c, 24d, 24e) include at least one latch reinforcement area (24e).

7. The reinforcement attachment arrangement (10; 300; 400; 500; 600, 800) of claim 2, wherein the at least one connection member (32a, 32d, 32e; 132; 232a-232d) is a snap tab configured to slide through the at least one aperture (320; 420; 520; 620; 704) of the reinforcement (18a, 18b, 20a, 20b, 22; 118; 218; 310; 410; 510; 610; 710; 802) and hold the reinforcement (18a, 18b, 20a, 20b, 22; 118; 218; 310; 410; 510; 610; 710; 802) onto the surface of the liftgate inner panel (14; 114; 302; 402; 502; 602; 702; 810).

8. The reinforcement attachment arrangement (10; 300; 400; 500; 600, 800) of claim 1 or 2, wherein the at least one receiving portion (128) has a key post (132) with a round head (133) and stem (135), the at least one engagement tab (126) has a key hole (137) wherein the round head (133) and stem (135) align with and slide into the key hold (137) to connect the reinforcement (118) to the liftgate inner panel (14; 114; 302; 402; 502; 602; 702; 810), or
wherein the engagement end (318; 418; 518; 618) extends perpendicular to the neck (316; 416; 516; 616).

9. The reinforcement attachment arrangement (10; 300; 400; 500; 600, 800) of claim 1 or 2, further comprising:
wherein the at least one receiving portion (28a, 28b, 28c, 28d, 28e; 128; 228; 306; 406; 506; 606) has an aperture (520) with a flexible tab (521), and
wherein the engagement tab (26a, 26b, 26c, 26d, 26e; 126; 226; 308; 408; 508; 608) has a neck (516) that forms a bend in the reinforcement (18a, 18b, 20a, 20b, 22; 118; 218; 310; 410; 510; 610; 710; 802) that bends away from a main surface (511) of the reinforcement (18a, 18b, 20a, 20b, 22; 118; 218; 310; 410; 510; 610; 710; 802), the neck (516) terminates at an engagement end (318; 418; 518; 618), wherein the neck (516) and the engagement end (318; 418; 518; 618) slide through the aperture (520) and frictionally engage the flexible tab (521) to hold the reinforcement (18a, 18b, 20a, 20b, 22; 118; 218; 310; 410; 510; 610; 710; 802) onto the liftgate inner panel (14; 114; 302; 402; 502; 602; 702; 810).

10. The reinforcement attachment arrangement (10; 300; 400; 500; 600, 800) of claim 9, wherein the aperture (520) leads to a blind hole (519).

11. The reinforcement attachment arrangement (10; 300; 400; 500; 600, 800) of claim 1 or 2, further comprising:
wherein the at least one receiving portion (28a, 28b, 28c, 28d, 28e; 128; 228; 306; 406; 506; 606) includes an aperture (320; 420; 520; 620; 704) formed in the liftgate inner panel (14; 114; 302; 402; 502; 602; 702; 810),
wherein the at least one engagement tab (26a, 26b, 26c, 26d, 26e; 126; 226; 308; 408; 508; 608) has a tab that frictionally slides into the aperture (320; 420; 520; 620; 704).

12. The reinforcement attachment arrangement (10; 300; 400; 500; 600, 800) of claim 11, wherein the aperture (704) has slanted edges (706, 708) and the tab (712) has slanted edges (714, 716), where the slanted edges (706, 708) of the aperture (704) and the slanted edges (714, 716) of the tab (712) facilitate the alignment of the tab (712) into the aperture (704).

13. The reinforcement attachment arrangement (10; 300; 400; 500; 600, 800) of claim 1, further comprising a liftgate exterior panel (11) connected to the liftgate inner panel (14; 114; 302; 402; 502; 602; 702; 810) and covering the reinforcement areas (24a, 24b, 24c, 24d, 24e) and each reinforcement (18a, 18b, 20a, 20b, 22; 118; 218; 310; 410; 510; 610; 710; 802)

14. The reinforcement attachment arrangement (800) of claim 1 further comprising:
wherein the at least one engagement tab (26a, 26b, 26c, 26d, 26e; 126; 226; 308; 408; 508; 608) includes a pair of opposing tabs (806a, 806b) and the at least one receiving portion (28a, 28b, 28c, 28d, 28e; 128; 228; 306; 406; 506; 606) includes a flange (808) formed on the liftgate inner panel (810), wherein the opposing tabs (806a, 806b) lock the reinforcement (802) in place against the liftgate inner panel (810) by positioning the tabs (806a, 806b) between the flange (808), which prevents the reinforcement (802) from sliding past the flange (808).

15. A reinforcement attachment arrangement (10; 300; 400; 500; 600, 800) for a thermoplastic liftgate (12) comprising:
a liftgate inner panel (14; 114; 302; 402; 502; 602; 702; 810) having an outer surface area (16; 304; 404; 504; 604) with a plurality of reinforcement areas (24a, 24b, 24c, 24d, 24e) each having at least one receiving portion (28a, 28b, 28c, 28d, 28e; 128; 228; 306; 406; 506; 606) on the outer surface area (16; 304; 404; 504; 604) of the liftgate inner panel (14; 114; 302; 402; 502; 602; 702; 810);
a reinforcement (18a, 18b, 20a, 20b, 22; 118; 218; 310; 410; 510; 610; 710; 802) connected to each respective one of the plurality of reinforcement areas (24a, 24b, 24c, 24d, 24e) of the inner panel (14; 114; 302; 402; 502; 602; 702; 810), wherein each reinforcement (18a, 18b, 20a, 20b, 22; 118; 218; 310; 410; 510; 610; 710; 802) includes at least one engagement tab (26a, 26b, 26c, 26d, 26e; 126; 226; 308; 408; 508; 608) for engaging the at least one receiving portion (28a, 28b, 28c, 28d, 28e; 128; 228; 306; 406; 506; 606) of the respective one of the plurality of reinforcement areas (24a, 24b, 24c, 24d, 24e) to hold the reinforcement (18a, 18b, 20a, 20b, 22; 118; 218; 310; 410; 510; 610; 710; 802) onto the outer surface (16; 304; 404; 504; 604) of the liftgate inner panel (14; 114; 302; 402; 502; 602; 702; 810) when the at least one engagement tab (26a, 26b, 26c, 26d, 26e; 126; 226; 308; 408; 508; 608) is positioned in engagement with the at least one receiving portion (28a, 28b, 28c, 28d, 28e; 128; 228; 306; 406; 506; 606),
**characterised in that** the at least one engagement tab (26a, 26b, 26c, 26d, 26e; 126; 226; 308; 408; 508; 608) includes a pair of opposing tabs (806a, 806b) and the at least one receiving portion (28a, 28b, 28c, 28d, 28e; 128; 228; 306; 406; 506; 606) includes a flange (808) formed on the liftgate inner panel (810), wherein the opposing tabs (806a, 806b) lock the reinforcement (802) in place against the liftgate inner panel (810) by positioning the tabs (806a, 806b) between the flange (808), which prevents the reinforcement (802) from sliding past the flange (808).

## Patentansprüche

1. Verstärkungsbefestigungsanordnung (10; 300; 400; 500; 600, 800) für eine thermoplastische Heckklappe (12), umfassend:
eine Heckklappeninnenplatte (14; 114; 302; 402; 502; 602; 702; 810), die einen Außenoberflächenbereich (16; 304; 404; 504; 604) mit einer Vielzahl von Verstärkungsbereichen (24a, 24b, 24c, 24d, 24e) aufweist, die jeweils mindestens einen Aufnahmeabschnitt (28a, 28b, 28c, 28d, 28e; 128; 228; 306; 406; 506; 606) auf dem Außenoberflächenbereich (16; 304; 404; 504; 604) der Heckklappeninnenplatte (14; 114; 302; 402; 502; 602; 702; 810) aufweisen;
eine Verstärkung (18a, 18b, 20a, 20b, 22; 118; 218; 310; 410; 510; 610; 710; 802), die mit jeweils einem der Vielzahl von Verstärkungsbereichen (24a, 24b, 24c, 24d, 24e) der Innenplatte (14; 114; 302; 402; 502; 602; 702; 810) verbunden ist, wobei jede Verstärkung (18a, 18b, 20a, 20b, 22; 118; 218; 310; 410; 510; 610; 710; 802) mindestens eine Eingriffslasche (26a, 26b, 26c, 26d, 26e; 126; 226; 308; 408; 508; 608) zum Eingreifen in den mindestens einen Aufnahmeabschnitt (28a, 28b, 28c, 28d, 28e; 128; 228; 306; 406; 506; 606) des jeweiligen der Vielzahl von Verstärkungsbereichen (24a, 24b, 24c, 24d, 24e) einschließt, um die Verstärkung (18a, 18b, 20a, 20b, 22; 118; 218; 310; 410; 510; 610; 710; 802) auf der Außenoberfläche (16; 304; 404; 504; 604) der Heckklappeninnenplatte (14; 114; 302; 402; 502; 602; 702; 810) zu halten, wenn die mindestens eine Eingriffslasche (26a, 26b, 26c, 26d, 26e; 126; 226; 308; 408; 508; 608) in Eingriff mit dem mindestens einen Aufnahmeabschnitt (28a, 28b, 28c, 28d, 28e; 128; 228; 306; 406; 506; 606) positioniert ist,
**dadurch gekennzeichnet, dass**
die Eingriffslasche (26a, 26b, 26c, 26d, 26e; 126; 226; 308; 408; 508; 608) der Verstärkung (18a, 18b, 20a, 20b, 22; 118; 218; 310; 410; 510; 610; 710; 802) einen Hals (316; 416; 516; 616) aufweist, der an einem Eingriffsende (318; 418; 518; 618) endet, und der mindestens eine Aufnahmeabschnitt (28a, 28b, 28c, 28d, 28e; 128; 228; 306; 406; 506; 606) eine Öffnung (320; 420; 520; 620; 704) ist, die in der Heckklappeninnenplatte (14; 114; 302; 402; 502; 602; 702; 810) ausgebildet ist, wobei das Eingriffsende (318; 418; 518; 618) in die Öffnung (320; 420; 520; 620; 704) gleitet, um die Verstärkung (18a, 18b, 20a, 20b, 22; 118; 218; 310; 410; 510; 610; 710; 802) mit der Heckklappeninnenplatte (14; 114; 302; 402; 502; 602; 702; 810) zu verbinden.

2. Verstärkungsbefestigungsanordnung (10; 300; 400; 500; 600, 800) nach Anspruch 1,
wobei die Vielzahl von Verstärkungsbereichen (24a, 24b, 24c, 24d, 24e) ferner jeweils mindestens ein Verbindungsbauteil (32a, 32d, 32e; 132; 232a-232d) aufweist, das sich von dem Außenoberflächenbereich (16; 304; 404; 504; 604) der Heckklappeninnenplatte (14; 114; 302; 402; 502; 602; 702; 810) erstreckt;
und jede Verstärkung (18a, 18b, 20a, 20b, 22; 118; 218; 310; 410; 510; 610; 710; 802) ferner mindestens eine Öffnung (30a, 30b, 30c, 30d, 30e, 30f; 230a-230d) einschließt, die mit mindestens einem Verbindungsbauteil (32a, 32d, 32e; 132; 232a-232d) ausgerichtet ist, das an der Außenoberfläche der Heckklappeninnenplatte (14; 114; 302; 402; 502; 602; 702; 810) ausgebildet ist, um die Verstärkung (18a, 18b, 20a, 20b, 22; 118; 218; 310; 410; 510; 610; 710; 802) auf die Außenoberfläche (16; 304; 404; 504; 604) der Heckklappeninnenplatte (14; 114; 302; 402; 502; 602; 702; 810) zu halten, wenn die mindestens eine Eingriffslasche (26a, 26b, 26c, 26d, 26e; 126; 226; 308; 408; 508; 608) in Eingriff mit dem mindestens einen Aufnahmeabschnitt (28a, 28b, 28c, 28d, 28e; 128; 228; 306; 406; 506; 606) positioniert ist, und ferner umfassend
eine Heckklappenaußenplatte (11), die mit der Heckklappeninnenplatte (14; 114; 302; 402; 502; 602; 702; 810) verbunden ist und die Verstärkungsbereiche (24a, 24b, 24c, 24d, 24e) und jede Verstärkung (18a, 18b, 20a, 20b, 22; 118; 218; 310; 410; 510; 610; 710; 802) abdeckt.

3. Verstärkungsbefestigungsanordnung (10; 300; 400; 500; 600, 800) nach Anspruch 2, ferner umfassend:
wobei das mindestens eine Verbindungsbauteil (32a, 32d, 32e; 132; 232a-232d) mindestens ein Befestigungsvorsprung ist, der an der Außenoberfläche (16; 304; 404; 504; 604) ausgebildet ist;
ein Befestigungselement, das sich durch die mindestens eine Öffnung (30a, 30b, 30c, 30d, 30e, 30f; 230a-230d) der Verstärkung (18a, 18b, 20a, 20b, 22; 118; 218; 310; 410; 510; 610; 710; 802) erstreckt und mit dem mindestens einen Befestigungsvorsprung verbunden ist.

4. Verstärkungsbefestigungsanordnung (10; 300; 400; 500; 600, 800) nach Anspruch 1 oder 2, wobei die Vielzahl von Verstärkungsbereichen (24a, 24b, 24c, 24d, 24e) mindestens einen Scharnierverstärkungsbereich (24a, 24b) einschließt.

5. Verstärkungsbefestigungsanordnung (10; 300; 400; 500; 600, 800) nach Anspruch 1 oder 2, wobei die Vielzahl von Verstärkungsbereichen (24a, 24b, 24c, 24d, 24e) mindestens einen Kugelzapfenverstärkungsbereich (24c, 24d) einschließt.

6. Verstärkungsbefestigungsanordnung (10; 300; 400; 500; 600, 800) nach Anspruch 1 oder 2, wobei die Vielzahl von Verstärkungsbereichen (24a, 24b, 24c, 24d, 24e) mindestens einen Riegelverstärkungsbereich (24e) einschließt.

7. Verstärkungsbefestigungsanordnung (10; 300; 400; 500; 600, 800) nach Anspruch 2, wobei das mindestens eine Verbindungsbauteil (32a, 32d, 32e; 132; 232a-232d) eine Schnapplasche ist, die konfiguriert ist, um durch die mindestens eine Öffnung (320; 420; 520; 620; 704) der Verstärkung (18a, 18b, 20a, 20b, 22; 118; 218; 310; 410; 510; 610; 710; 802) zu gleiten und die Verstärkung (18a, 18b, 20a, 20b, 22; 118; 218; 310; 410; 510; 610; 710; 802) auf die Oberfläche der Heckklappeninnenplatte (14; 114; 302; 402; 502; 602; 702; 810) zu halten.

8. Verstärkungsbefestigungsanordnung (10; 300; 400; 500; 600, 800) nach Anspruch 1 oder 2, wobei der mindestens eine Aufnahmeabschnitt (128) einen Schlüsselpfosten (132) mit einem runden Kopf (133) und einem Schaft (135) aufweist, wobei die mindestens eine Eingriffslasche (126) ein Schlüsselloch (137) aufweist, wobei der runde Kopf (133) und der Schaft (135) mit dem Schlüsselloch (137) ausgerichtet sind und in dieses hineingleiten, um die Verstärkung (118) mit der Heckklappeninnenplatte (14; 114; 302; 402; 502; 602; 702; 810) zu verbinden, oder
wobei sich das Eingriffsende (318; 418; 518; 618) senkrecht zu dem Hals (316; 416; 516; 616) erstreckt.

9. Verstärkungsbefestigungsanordnung (10; 300; 400; 500; 600, 800) nach Anspruch 1 oder 2, ferner umfassend:
wobei der mindestens eine Aufnahmeabschnitt (28a, 28b, 28c, 28d, 28e; 128; 228; 306; 406; 506; 606) eine Öffnung (520) mit einer flexiblen Lasche (521) aufweist, und
wobei die Eingriffslasche (26a, 26b, 26c, 26d, 26e; 126; 226; 308; 408; 508; 608) einen Hals (516) aufweist, der eine Biegung in der Verstärkung (18a, 18b, 20a, 20b, 22; 118; 218; 310; 410; 510; 610; 710; 802) ausbildet, die sich von einer Hauptoberfläche (511) der Verstärkung (18a, 18b, 20a, 20b, 22; 118; 218; 310; 410; 510; 610; 710; 802) weg biegt, wobei der Hals (516) an einem Eingriffsende (318; 418; 518; 618) endet, wobei der Hals (516) und das Eingriffsende (318; 418; 518; 618) durch die Öffnung (520) gleiten und in die flexible Lasche (521) reibschlüssig eingreifen, um die Verstärkung (18a, 18b, 20a, 20b, 22; 118; 218; 310; 410; 510; 610; 710; 802) an der Heckklappeninnenplatte (14; 114; 302; 402; 502; 602; 702; 810) zu halten.

10. Verstärkungsbefestigungsanordnung (10; 300; 400; 500; 600, 800) nach Anspruch 9, wobei die Öffnung (520) zu einem Blindloch (519) führt.

11. Verstärkungsbefestigungsanordnung (10; 300; 400; 500; 600, 800) nach Anspruch 1 oder 2, ferner umfassend:
wobei der mindestens eine Aufnahmeabschnitt (28a, 28b, 28c, 28d, 28e; 128; 228; 306; 406; 506; 606) eine Öffnung (320; 420; 520; 620; 704) einschließt, die in der Heckklappeninnenplatte (14; 114; 302; 402; 502; 602; 702; 810) ausgebildet ist,
wobei die mindestens eine Eingriffslasche (26a, 26b, 26c, 26d, 26e; 126; 226; 308; 408; 508; 608) eine Lasche aufweist, die in die Öffnung (320; 420; 520; 620; 704) reibschlüssig gleitet.

12. Verstärkungsbefestigungsanordnung (10; 300; 400; 500; 600, 800) nach Anspruch 11, wobei die Öffnung (704) schräge Kanten (706, 708) aufweist und die Lasche (712) schräge Kanten (714, 716) aufweist, wobei die schrägen Kanten (706, 708) der Öffnung (704) und die schrägen Kanten (714, 716) der Lasche (712) die Ausrichtung der Lasche (712) in die Öffnung (704) erleichtern.

13. Verstärkungsbefestigungsanordnung (10; 300; 400; 500; 600, 800) nach Anspruch 1, ferner umfassend eine Heckklappenaußenplatte (11), die mit der Heckklappeninnenplatte (14; 114; 302; 402; 502; 602; 702; 810) verbunden ist und die Verstärkungsbereiche (24a, 24b, 24c, 24d, 24e) und jede Verstärkung (18a, 18b, 20a, 20b, 22; 118; 218; 310; 410; 510; 610; 710; 802) abdeckt.

14. Verstärkungsbefestigungsanordnung (800) nach Anspruch 1, ferner umfassend:
wobei die mindestens eine Eingriffslasche (26a, 26b, 26c, 26d, 26e; 126; 226; 308; 408; 508; 608) ein Paar gegenüberliegende Laschen (806a, 806b) einschließt und der mindestens eine Aufnahmeabschnitt (28a, 28b, 28c, 28d, 28e; 128; 228; 306; 406; 506; 606) einen Flansch (808) einschließt, der an der Heckklappeninnenplatte (810) ausgebildet ist, wobei die gegenüberliegenden Laschen (806a, 806b) die Verstärkung (802) durch Positionieren der Laschen (806a, 806b) zwischen dem Flansch (808) an Ort und Stelle an der Heckklappeninnenplatte (810) verriegeln, was verhindert, dass die Verstärkung (802) an dem Flansch (808) vorbeigleitet.

15. Verstärkungsbefestigungsanordnung (10; 300; 400; 500; 600, 800) für eine thermoplastische Heckklappe (12), umfassend:
eine Heckklappeninnenplatte (14; 114; 302; 402; 502; 602; 702; 810), die einen Außenoberflächenbereich (16; 304; 404; 504; 604) mit einer Vielzahl von Verstärkungsbereichen (24a, 24b, 24c, 24d, 24e) aufweist, die jeweils mindestens einen Aufnahmeabschnitt (28a, 28b, 28c, 28d, 28e; 128; 228; 306; 406; 506; 606) auf dem Außenoberflächenbereich (16; 304; 404; 504; 604) der Heckklappeninnenplatte (14; 114; 302; 402; 502; 602; 702; 810) aufweisen;
eine Verstärkung (18a, 18b, 20a, 20b, 22; 118; 218; 310; 410; 510; 610; 710; 802), die mit jeweils einem der Vielzahl von Verstärkungsbereichen (24a, 24b, 24c, 24d, 24e) der Innenplatte (14; 114; 302; 402; 502; 602; 702; 810) verbunden ist, wobei jede Verstärkung (18a, 18b, 20a, 20b, 22; 118; 218; 310; 410; 510; 610; 710; 802) mindestens eine Eingriffslasche (26a, 26b, 26c, 26d, 26e; 126; 226; 308; 408; 508; 608) zum Eingreifen in den mindestens einen Aufnahmeabschnitt (28a, 28b, 28c, 28d, 28e; 128; 228; 306; 406; 506; 606) des jeweiligen der Vielzahl von Verstärkungsbereichen (24a, 24b, 24c, 24d, 24e) einschließt, um die Verstärkung (18a, 18b, 20a, 20b, 22; 118; 218; 310; 410; 510; 610; 710; 802) auf der Außenoberfläche (16; 304; 404; 504; 604) der Heckklappeninnenplatte (14; 114; 302; 402; 502; 602; 702; 810) zu halten, wenn die mindestens eine Eingriffslasche (26a, 26b, 26c, 26d, 26e; 126; 226; 308; 408; 508; 608) in Eingriff mit dem mindestens einen Aufnahmeabschnitt (28a, 28b, 28c, 28d, 28e; 128; 228; 306; 406; 506; 606) positioniert ist,
**dadurch gekennzeichnet, dass**
die mindestens eine Eingriffslasche (26a, 26b, 26c, 26d, 26e; 126; 226; 308; 408; 508; 608) ein Paar gegenüberliegende Laschen (806a, 806b) einschließt und der mindestens eine Aufnahmeabschnitt (28a, 28b, 28c, 28d, 28e; 128; 228; 306; 406; 506; 606) einen Flansch (808) einschließt, der an der Heckklappeninnenplatte (810) ausgebildet ist, wobei die gegenüberliegenden Laschen (806a, 806b) die Verstärkung (802) durch Positionieren der Laschen (806a, 806b) zwischen dem Flansch (808) an Ort und Stelle an der Heckklappeninnenplatte (810) verriegeln, was verhindert, dass die Verstärkung (802) an dem Flansch (808) vorbeigleitet.

## Revendications

1. Agencement d'attache de renforcement (10 ; 300 ; 400 ; 500 ; 600 ; 800) pour un hayon thermoplastique (12) comprenant :
un panneau intérieur de hayon (14 ; 114 ; 302 ; 402 ; 502 ; 602 ; 702 ; 810) ayant une zone de surface extérieure (16 ; 304 ; 404 ; 504 ; 604) avec une pluralité de zones de renforcement (24a, 24b, 24c, 24d, 24e) ayant chacune au moins une portion de réception (28a, 28b, 28c, 28d, 28e ; 128 ; 228 ; 306 ; 406 ; 506 ; 606) sur la zone de surface extérieure (16 ; 304 ; 404 ; 504 ; 604) du panneau intérieur de hayon (14 ; 114 ; 302 ; 402 ; 502 ; 602 ; 702 ; 810) ; un renforcement (18a, 18b, 20a, 20b, 22 ; 118 ; 218 ; 310 ; 410 ; 510 ; 610 ; 710 ; 802) connecté à chaque zone respective de la pluralité de zones de renforcement (24a, 24b, 24c, 24d, 24e) du panneau intérieur (14 ; 114 ; 302 ; 402 ; 502 ; 602 ; 702 ; 810), dans lequel chaque renforcement (18a, 18b, 20a, 20b, 22 ; 118 ; 218 ; 310 ; 410 ; 510 ; 610 ; 710 ; 802) inclut au moins une patte d'engagement (26a, 26b, 26c, 26d, 26e ; 126 ; 226 ; 308 ; 408 ; 508 ; 608) destinée à engager ladite au moins une portion de réception (28a, 28b, 28c, 28d, 28e ; 128 ; 228 ; 306 ; 406 ; 506 ; 606) d'une zone respective de la pluralité de zones de renforcement (24a, 24b, 24c, 24d, 24e) pour maintenir le renforcement (18a, 18b, 20a, 20b, 22 ; 118 ; 218 ; 310 ; 410 ; 510 ; 610 ; 710 ; 802) jusque sur la surface extérieure (16 ; 304 ; 404 ; 504 ; 604) du panneau intérieur de hayon (14 ; 114 ; 302 ; 402 ; 502 ; 602 ; 702 ; 810) quand ladite au moins une patte d'engagement (26a, 26b, 26c, 26d, 26e ; 126 ; 226 ; 308 ; 408 ; 508 ; 608) est positionnée en engagement avec ladite au moins une portion de réception (28a, 28b, 28c, 28d, 28e ; 128 ; 228 ; 306 ; 406 ; 506 ; 606),
**caractérisé en ce que**
la patte d'engagement (26a, 26b, 26c, 26d, 26e ; 126 ; 226 ; 308 ; 408 ; 508 ; 608) du renforcement (18a, 18b, 20a, 20b, 22 ; 118 ; 218 ; 310 ; 410 ; 510 ; 610 ; 710 ; 802) a un col (316 ; 416 ; 516 ; 616) qui se termine au niveau d'une extrémité d'engagement (318 ; 418 ; 518 ; 618) et ladite au moins une portion de réception (28a, 28b, 28c, 28d, 28e ; 128 ; 228 ; 306 ; 406 ; 506 ; 606) est une ouverture (320 ; 420 ; 520 ; 620 ; 704) formée dans le panneau intérieur de hayon (14 ; 114 ; 302 ; 402 ; 502 ; 602 ; 702 ; 810), dans lequel l'extrémité d'engagement (318 ; 418 ; 518 ; 618) coulisse jusque dans l'ouverture (320 ; 420 ; 520 ; 620 ; 704) pour connecter le renforcement (18a, 18b, 20a, 20b, 22 ; 118 ; 218 ; 310 ; 410 ; 510 ; 610 ; 710 ; 802) au panneau intérieur de hayon (14 ; 114 ; 302 ; 402 ; 502 ; 602 ; 702 ; 810).

2. Agencement d'attache de renforcement (10 ; 300 ; 400 ; 500 ; 600 ; 800) selon la revendication 1,
dans lequel la pluralité de zones de renforcement (24a, 24b, 24c, 24d, 24e) ont en outre chacune au moins un élément de connexion (32a, 32d, 32e ; 132 ; 232a-232d) s'étendant depuis la zone de surface extérieure (16 ; 304 ; 404 ; 504 ; 604) du panneau intérieur de hayon (14 ; 114 ; 302 ; 402 ; 502 ; 602 ; 702 ; 810) ;
et chaque renforcement (18a, 18b, 20a, 20b, 22 ; 118 ; 218 ; 310 ; 410 ; 510 ; 610 ; 710 ; 802) inclut en outre au moins une ouverture (30a, 30b, 30c, 30d, 30e, 30f ; 230a-230d) qui est alignée avec au moins un élément de connexion (32a, 32d, 32e ; 132 ; 232a-232d) formé sur la surface extérieure du panneau intérieur de hayon (14 ; 114 ; 302 ; 402 ; 502 ; 602 ; 702 ; 810) pour maintenir le renforcement (18a, 18b, 20a, 20b, 22 ; 118 ; 218 ; 310 ; 410 ; 510 ; 610 ; 710 ; 802) jusque sur la surface extérieure (16 ; 304 ; 404 ; 504 ; 604) du panneau intérieur de hayon (14 ; 114 ; 302 ; 402 ; 502 ; 602 ; 702 ; 810) quand ladite au moins une patte d'engagement (26a, 26b, 26c, 26d, 26e ; 126 ; 226 ; 308 ; 408 ; 508 ; 608) est positionnée en engagement avec ladite au moins une portion de réception (28a, 28b, 28c, 28d, 28e ; 128 ; 228 ; 306 ; 406 ; 506 ; 606), et comprenant en outre
un panneau extérieur de hayon (11) connecté au panneau intérieur de hayon (14 ; 114 ; 302 ; 402 ; 502 ; 602 ; 702 ; 810) et recouvrant les zones de renforcement (24a, 24b, 24c, 24d, 24e) et chaque renforcement (18a, 18b, 20a, 20b, 22 ; 118 ; 218 ; 310 ; 410 ; 510 ; 610 ; 710 ; 802).

3. Agencement d'attache de renforcement (10 ; 300 ; 400 ; 500 ; 600 ; 800) selon la revendication 2, comprenant en outre :
dans lequel ledit au moins un élément de connexion (32a, 32d, 32e ; 132 ; 232a-232d) est au moins un bossage de fixation formé sur la surface extérieure (16 ; 304 ; 404 ; 504 ; 604) ;
une fixation s'étendant à travers ladite au moins une ouverture (30a, 30b, 30c, 30d, 30e, 30f ; 230a-230d) du renforcement (18a, 18b, 20a, 20b, 22 ; 118 ; 218 ; 310 ; 410 ; 510 ; 610 ; 710 ; 802) et connectant ledit au moins un bossage de fixation.

4. Agencement d'attache de renforcement (10 ; 300 ; 400 ; 500 ; 600 ; 800) selon la revendication 1 ou 2, dans lequel la pluralité de zones de renforcement (24a, 24b, 24c, 24d, 24e) incluent au moins une zone de renforcement de charnière (24a, 24b).

5. Agencement d'attache de renforcement (10 ; 300 ; 400 ; 500 ; 600 ; 800) selon la revendication 1 ou 2, dans lequel la pluralité de zones de renforcement (24a, 24b, 24c, 24d, 24e) incluent au moins une zone de renforcement de goujon à rotule (24c, 24d).

6. Agencement d'attache de renforcement (10 ; 300 ; 400 ; 500 ; 600 ; 800) selon la revendication 1 ou 2, dans lequel la pluralité de zones de renforcement (24a, 24b, 24c, 24d, 24e) incluent au moins une zone de renforcement de verrou (24e).

7. Agencement d'attache de renforcement (10 ; 300 ; 400 ; 500 ; 600 ; 800) selon la revendication 2, dans lequel ledit au moins un élément de connexion (32a, 32d, 32e ; 132 ; 232a-232d) est une patte d'encliquetage configurée pour coulisser à travers ladite au moins une ouverture (320 ; 420 ; 520 ; 620 ; 704) du renforcement (18a, 18b, 20a, 20b, 22 ; 118 ; 218 ; 310 ; 410 ; 510 ; 610 ; 710 ; 802) et pour maintenir le renforcement (18a, 18b, 20a, 20b, 22 ; 118 ; 218 ; 310 ; 410 ; 510 ; 610 ; 710 ; 802) jusque sur la surface du panneau intérieur de hayon (14 ; 114 ; 302 ; 402 ; 502 ; 602 ; 702 ; 810).

8. Agencement d'attache de renforcement (10 ; 300 ; 400 ; 500 ; 600 ; 800) selon la revendication 1 ou 2, dans lequel ladite au moins une portion de réception (128) a un plot de clavette (132) avec une tête arrondie (133) et une tige (135), ladite au moins une patte d'engagement (126) a un trou de clavette (137), dans lequel la tête arrondie (133) et la tige (135) sont alignées avec et coulissent jusque dans le trou de clavette (137) pour connecter le renforcement (118) au panneau intérieur de hayon (14 ; 114 ; 302 ; 402 ; 502 ; 602 ; 702 ; 810), ou
dans lequel l'extrémité d'engagement (318 ; 418 ; 518 ; 618) s'étend perpendiculairement au col (316 ; 416 ; 516 ; 616).

9. Agencement d'attache de renforcement (10 ; 300 ; 400 ; 500 ; 600 ; 800) selon la revendication 1 ou 2, comprenant en outre :
dans lequel ladite au moins une portion de réception (28a, 28b, 28c, 28d, 28e ; 128 ; 228 ; 306 ; 406 ; 506 ; 606) a une ouverture (520) avec une patte flexible (521), et
dans lequel la patte d'engagement (26a, 26b, 26c, 26d, 26e ; 126 ; 226 ; 308; 408 ; 508 ; 608) a un col (516) qui forme un coude dans le renforcement (18a, 18b, 20a, 20b, 22 ; 118 ; 218 ; 310 ; 410 ; 510 ; 610 ; 710 ; 802) qui s'incurve en éloignement d'une surface principale (511) du renforcement (18a, 18b, 20a, 20b, 22 ; 118 ; 218 ; 310 ; 410 ; 510 ; 610 ; 710 ; 802), le col (516) se terminant au niveau d'une extrémité d'engagement (318 ; 418 ; 518 ; 618), dans lequel le col (516) et l'extrémité d'engagement (318 ; 418 ; 518 ; 618) coulissent à travers l'ouverture (520) et engagent par frottement la patte flexible (521) pour maintenir le renforcement (18a, 18b, 20a, 20b, 22 ; 118 ; 218 ; 310 ; 410 ; 510 ; 610 ; 710 ; 802) jusque sur le panneau intérieur de hayon (14 ; 114 ; 302 ; 402 ; 502 ; 602 ; 702 ; 810)

10. Agencement d'attache de renforcement (10 ; 300 ; 400 ; 500 ; 600 ; 800) selon la revendication 9, dans lequel l'ouverture (520) mène à un trou borgne (519).

11. Agencement d'attache de renforcement (10 ; 300 ; 400 ; 500 ; 600 ; 800) selon la revendication 1 ou 2, comprenant en outre :
dans lequel ladite au moins une portion de réception (28a, 28b, 28c, 28d, 28e ; 128 ; 228 ; 306 ; 406 ; 506 ; 606) inclut une ouverture (320 ; 420 ; 520 ; 620 ; 704) formée dans le panneau intérieur de hayon (14 ; 114 ; 302 ; 402 ; 502 ; 602 ; 702 ; 810),
dans lequel ladite au moins une patte d'engagement (26a, 26b, 26c, 26d, 26e ; 126 ; 226 ; 308 ; 408 ; 508 ; 608) a une patte qui coulisse par frottement jusque dans l'ouverture (320 ; 420 ; 520 ; 620 ; 704).

12. Agencement d'attache de renforcement (10 ; 300 ; 400 ; 500 ; 600 ; 800) selon la revendication 11, dans lequel l'ouverture (704) a des bords obliques (706, 708) et la patte (712) a des bords obliques (714, 716), où les bords obliques (706, 708) de l'ouverture (704) et les bords obliques (714, 716) de la patte (712) facilitent l'alignement de la patte (712) jusque dans l'ouverture (104).

13. Agencement d'attache de renforcement (10 ; 300 ; 400 ; 500 ; 600 ; 800) selon la revendication 1, comprenant en outre un panneau extérieur de hayon (11) connecté au panneau intérieur de hayon (14 ; 114 ; 302 ; 402 ; 502 ; 602 ; 702 ; 810) et recouvrant les zones de renforcement (24a, 24b, 24c, 24d, 24e) et chaque renforcement (18a, 18b, 20a, 20b, 22 ; 118 ; 218 ; 310 ; 410 ; 510 ; 610 ; 710 ; 802).

14. Agencement d'attache de renforcement (800) selon la revendication 1, comprenant :
dans lequel ladite au moins une patte d'engagement (26a, 26b, 26c, 26d, 26e ; 126 ; 226 ; 308 ; 408 ; 508 ; 608) inclut une paire de pattes opposées (806a, 806b) et ladite au moins une portion de réception (28a, 28b, 28c, 28d, 28e ; 128 ; 228 ; 306 ; 406 ; 506 ; 606) inclut une bride (808) formée sur le panneau intérieur de hayon (810), dans lequel les pattes opposées (806a, 806b) bloquent le renforcement (802) en place contre le panneau intérieur de hayon (810) en positionnant les pattes (806a, 806b) entre la bride (808), ce qui empêche le renforcement (802) de glisser au-delà de la bride (808).

15. Agencement d'attache de renforcement (10 ; 300 ; 400 ; 500 ; 600 ; 800) pour un hayon thermoplastique (12) comprenant :
un panneau intérieur de hayon (14 ; 114 ; 302 ; 402 ; 502 ; 602 ; 702 ; 810) ayant une zone de surface extérieure (16 ; 304 ; 404 ; 504 ; 604) avec une pluralité de zones de renforcement (24a, 24b, 24c, 24d, 24e) ayant chacune au moins une portion de réception (28a, 28b, 28c, 28d, 28e ; 128 ; 228 ; 306 ; 406 ; 506 ; 606) sur la zone de surface extérieure (16 ; 304 ; 404 ; 504 ; 604) du panneau intérieur de hayon (14 ; 114 ; 302 ; 402 ; 502 ; 602 ; 702 ; 810) ; un renforcement (18a, 18b, 20a, 20b, 22 ; 118 ; 218 ; 310 ; 410 ; 510 ; 610 ; 710 ; 802) connecté à chaque zone respective de la pluralité de zones de renforcement (24a, 24b, 24c, 24d, 24e) du panneau intérieur (14 ; 114 ; 302 ; 402 ; 502 ; 602 ; 702 ; 810), dans lequel chaque renforcement (18a, 18b, 20a, 20b, 22 ; 118 ; 218 ; 310 ; 410 ; 510 ; 610 ; 710 ; 802) inclut au moins une patte d'engagement (26a, 26b, 26c, 26d, 26e ; 126 ; 226 ; 308 ; 408 ; 508 ; 608) destinée à engager ladite au moins une portion de réception (28a, 28b, 28c, 28d, 28e ; 128 ; 228 ; 306 ; 406 ; 506 ; 606) de la zone respective de la pluralité de zones de renforcement (24a, 24b, 24c, 24d, 24e) pour maintenir le renforcement (18a, 18b, 20a, 20b, 22 ; 118 ; 218 ; 310 ; 410 ; 510 ; 610 ; 710 ; 802) jusque sur la surface extérieure (16 ; 304 ; 404 ; 504 ; 604) du panneau intérieur de hayon (14 ; 114 ; 302 ; 402 ; 502 ; 602 ; 702 ; 810) quand ladite au moins une patte d'engagement (26a, 26b, 26c, 26d, 26e ; 126 ; 226 ; 308 ; 408 ; 508 ; 608) est positionnée en engagement avec ladite au moins une portion de réception (28a, 28b, 28c, 28d, 28e ; 128 ; 228 ; 306 ; 406 ; 506 ; 606),
**caractérisé en ce que**
la patte d'engagement (26a, 26b, 26c, 26d, 26e ; 126 ; 226 ; 308 ; 408 ; 508 ; 608) inclut une paire de pattes opposées (806a, 806b) et ladite au moins une portion de réception (28a, 28b, 28c, 28d, 28e ; 128 ; 228 ; 306 ; 406 ; 506 ; 606) inclut une bride (808) formée sur le panneau intérieur de hayon (810), dans lequel les pattes opposées bloquent le renforcement (802) en place contre le panneau intérieur de hayon (810) en positionnant les pattes (806a, 806b) entre la bride (808), ce qui empêche le renforcement (802) de glisser au-delà de la bride (808).
